# EUROPÄISCHE PATENTANMELDUNG

(11) **EP 2 479 223 A1**
(43) Veröffentlichungstag der Anmeldung: **25.07.2012**
(21) Anmeldenummer: 12000315.7
(22) Anmeldetag: 19.01.2012
(51) Int. Cl.: C09C 1/50, C01B 31/00

(54) **Verfahren zur Herstellung von Ruß**

(30) Priorität: 21.01.2011 DE 102011003002
(71) Anmelder: Orion Engineered Carbons GmbH, 63457 Hanau (DE)
(72) Erfinder: Karl, Alfons, 63584 Gründau (DE); Stanyschöfsky, Michael, 50354 Hürth (DE); Wylucki, Ralf, 47506 Neukirchen (DE)
(74) Vertreter: Polypatent

(57) **Zusammenfassung**

Die Erfindung betrifft ein Verfahren zur Herstellung von Furnaceruß in einem Furnacerußreaktor, welcher längs der Reaktorachse eine Verbrennungszone, eine Reaktionszone und eine Abbruchzone enthält, durch Erzeugen eines Stromes heißen Abgases in der Verbrennungszone durch vollständiges Verbrennen eines Brennstoffes in einem Sauerstoff enthaltenden Gas und Leiten des Abgases von der Verbrennungszone durch die Reaktionszone in die Abbruchzone, Einmischen eines Rußrohstoffes in das heiße Abgas in der Reaktionszone und Abstoppen der Reaktion zwischen Ruß und den heißen Abgasen in der Abbruchzone durch Einsprühen von Wasser, wobei man in der Abbruchzone ein Oxidationsmittel-haltigen Gasstrom einleitet.

## Beschreibung

Die Erfindung betrifft ein Verfahren zur Herstellung von Ruß.

Industriell hergestellter Ruß wird durch Pyrolyse von Kohlenwasserstoffen bei hohen Temperaturen und speziellen Verfahrensbedingungen hergestellt. Unter diesen Bedingungen werden Spuren von polyaromatischen Kohlenwasserstoffen (PAKs) auf der Rußoberfläche gebildet.

Einige polyaromatische Kohlenwasserstoffe haben das Potenzial ungünstigen Einfluss auf die Gesundheit zu haben. Von Seiten der EU Regulierungsbehörde und den Verbrauchern wurden zur Reduzierung der polyaromatischen Kohlenwasserstoffen verschiedene Maßnahmen ergriffen (Bonn PJ, et. al., Formation of PAH-DNA adducts after in vivo and vitro exposure of rats and lung cells to different commercial carbon blacks, Toxicology and Applied Pharmacology, 2005 June 1; 205(2): 157-167., EU directive 2007119/EC, EU directive 2005/69/EC).

Aus DE-PS 3118907 ist ein Verfahren bekannt, bei dem extrahierbare Bestandteile von Rußen unter möglichst geringfügiger Änderung des pH-Wertes durch Behandeln im Fließbett mit einem Gasstrom bei erhöhten Temperaturen entfernt werden. Nachteil dieses Verfahrens ist der zusätzliche Nachbehandlungsschritt und die Verwendung von nur leicht fluidisierbaren Rußen, wie beispielsweise Gasruße.

Ferner ist aus US 4075157 ein Verfahren zur Herstellung von nicht-karzinogenen und normal härtenden Rußen beschrieben, bei dem das rußhaltige Abgas sehr spät gequencht wird und/oder dem rußhaltigen Abgas zwischen der Reaktionszone und der Quenchzone Sekundärluft zugegeben wird, der vom rußhaltigen Abgas abgetrennte Ruß oxidiert und verperlt wird, die nassen Rußperlen bei 260 - 316 °C getrocknet und anschließend einer Hochtemperaturnachbehandlung bei 538 - 760 °C unter Inertgas unterworfen werden.

Das Verfahren hat den Nachteil, dass die Porosität (=Differenz zwischen BET und CTAB) ansteigt und durch die Oxidation Oxide auf der Rußoberfläche gebildet werden. Da Oberflächenoxide bekanntermaßen die Anvulkanisationszeit von Kautschuksystemen verlängern, müssen diese wiederum über eine Hochtemperaturnachbehandlung entfernt werden, um normal härtende Ruße zu bekommen.

Aus WO 2008058114 ist bekannt, den PAK-Gehalt von Rußen reduzieren zu können, in dem man den Ruß bei hohen Temperaturen abscheidet, mit organischen Lösemitteln extrahiert oder bei Temperaturen von 300 - 950 °C im Vakuum oder unter Inertgas nachbehandelt.

Die beiden letzteren Verfahren haben den Nachteil, dass ein zusätzlicher aufwändiger Nachbehandlungsschritt erforderlich ist. Der Umgang mit großen Mengen an organischen brennbaren Stoffen birgt ein zusätzliches Risiko.

Ferner ist aus EP-PS 0629222 ein Verfahren bekannt, bei dem ein Oxidationsmittel enthaltender Gasstrom in die sekundäre Reaktionszone des Reaktors eingebracht wird um Oberflächen verändernde Reaktionen zu beschleunigen und zu fördern, ohne allerdings die in der ersten Reaktionszone stattfindenden Reaktionen und Prozesse, wie die Bildung der Primärteilchen und der Aggregate, zu beeinflussen.

Nachteil dieses Verfahrens ist, dass Oberflächen verändernde Reaktionen eintreten bzw. sogar erwünscht sind. Dies bedingt, dass die Jodzahl und die Porosität ansteigt, dass der pH-Wert durch die Bildung von sauren Oberflächengruppen sinkt und dass der Flüchtigengehalt bei 950 °C ansteigt. Diese Eigenschaftsänderung wirkt sich negativ auf viele Anwendungsgebiete aus.

Aufgabe der vorliegenden Erfindung ist es, ein Verfahren zur Verfügung zu stellen, bei dem der PAK-Gehalt bei Furnacerußen reduziert werden kann, ohne die Jodzahl, BET-Oberfläche, CTAB-Oberfläche, STSA, pH-Wert, Flüchtigengehalt und damit die Oberflächenchemie signifikant zu verändern.

Gegenstand der Erfindung ist ein Verfahren zur Herstellung von Furnaceruß in einem Furnacerußreaktor, welcher längs der Reaktorachse eine Verbrennungszone, eine Reaktionszone und eine Abbruchzone enthält, durch Erzeugen eines Stromes heißen Abgases in der Verbrennungszone durch vollständiges Verbrennen eines Brennstoffes in einem Sauerstoff enthaltenden Gas und Leiten des Abgases von der Verbrennungszone durch die Reaktionszone in die Abbruchzone, Einmischen eines Rußrohstoffes in das heiße Abgas in der Reaktionszone und Abstoppen der Reaktionen zwischen Ruß und den heißen Abgasen in der Abbruchzone durch Einsprühen von Wasser, welches dadurch gekennzeichnet ist, dass man in der Abbruchzone einen Oxidationsmittel-haltigen Gasstrom einleitet.

Das Oxidationsmittel kann Sauerstoff, Ozon, Wasserstoffperoxid, Salpetersäure, Stickstoffdioxid oder Distickstofftetroxid sein.

Der Oxidationsmittel-haltige Gasstrom kann Luft, mit Sauerstoff ab- oder angereicherte Luft, Sauerstoff, Ozon, ein Gasgemisch aus Wasserstoffperoxid und Luft und/oder Stickstoff, ein Gasgemisch aus Salpetersäure und Luft und/oder Stickstoff, ein Gasgemisch aus Stickstoffdioxid bzw. Distickstofftetroxid und Luft und/oder Stickstoff und ein Gasgemisch aus Verbrennungsprodukten von Kohlenwasserstoffen und Oxidationsmittel sein.

Der Brennstoff in der Verbrennungszone kann Erdgas, ein flüssiger oder gasförmiger, aliphatischer oder aromatischer Kohlenwasserstoff und deren Mischungen, wie beispielsweise Heizöl, sein.

Der Rußrohstoff kann fest, flüssig oder gasförmig sein. Der Rußrohstoff kann eine Mischung aus flüssigen aliphatischen oder aromatischen, gesättigten oder ungesättigten Kohlenwasserstoffen oder Mischungen hiervon, Destillate aus dem Steinkohlenteer oder Rückstandsöle, die beim katalytischen Cracken von Erdölfraktionen beziehungsweise bei der Olefinherstellung durch Cracken von Naphtha oder Gasöl entstehen, sein. Der Rußrohstoff kann eine Mischung aus gasförmigen Rußrohstoffen, beispielsweise gasförmige aliphatische, gesättigte oder ungesättigte Kohlenwasserstoffe, Mischungen hiervon oder Erdgas, sein.

Der Rußrohstoff kann nachwachsenden Rußrohstoff enthalten. Der Rußrohstoff kann ein nachwachsender Rohstoff, wie beispielsweise Biogas, Rapsöl, Sojaöl, Palmöl, Sonnenblumenöl, Öle aus Nüssen oder Olivenöl, oder Kohlestaub sein.

Der gasförmige und flüssige Brennstoff kann über eine oder mehrere Brennerlanzen zugegeben werden. Der flüssige Brennstoff kann über eine oder mehrere Brennerlanzen zugegeben und durch Druck, Dampf, Stickstoff oder Pressluft zerstäubt werden. Der feste Brennstoff kann über eine oder mehrere Dosierschnecken zugeführt werden.

Die Rußrohstoffe können mittels Radiallanzen und/oder Axiallanze eingedüst werden.

Der feste Rußrohstoff kann in dem Rußrohstoff dispergiert sein. Der flüssige Rußrohstoff kann durch Druck, Dampf, Stickstoff oder Pressluft zerstäubt werden.

Das erfindungsgemäße Verfahren ist nicht auf eine bestimmte Reaktorgeometrie beschränkt. Es kann vielmehr auf verschiedene Reaktortypen und Reaktorgrößen angepasst werden.

Als Rußrohstoff-Zerstäuber können sowohl reine Druckzerstäuber (Einstoffzerstäuber) als auch Zweistoffzerstäuber mit innerer oder äußerer Mischung eingesetzt werden.

Der Oxidationsmittel-haltige Gasstrom kann über eine oder mehrere radiale Lanzen oder über eine radiale Lanze, die in axiale Richtung mit dem Strom oder gegen den Strom sprüht, in die Abbruchzone eingebracht werden.

Der Oxidationsmittel-haltige Gasstrom kann auch als Zerstäubermedium für den Wasserquench genutzt und so in die Abbruchzone eingebracht werden. Wird der Oxidationsmittel-haltige Gasstrom als Zerstäubermedium für den Wasserquench genutzt, kann ein Zweistoffzerstäuber mit innerer oder äußerer Mischung eingesetzt werden.

Bei dem erfindungsgemäßen Verfahren können zwei Wasserquenche eingesetzt werden, wobei bei einem oder beiden Wasserquenche ein Oxidationsmittel-haltiger Gasstrom als Zerstäubermedium eingesetzt werden kann.

Der Oxidationsmittel-haltige Gasstrom kann eine Temperatur von -100 °C bis 1000 °C, vorzugsweise 0 °C bis 800 °C, besonders bevorzugt 20 °C bis 500 °C, haben.

Der Oxidationsmittel-haltige Gasstrom kann einen Druck von 5 kPa - 5.000 kPa, vorzugsweise 10 kPa - 2.500 kPa, besonders bevorzugt 50 kPa - 1.000 kPa, haben.

Das Verhältnis von Ölbeladung in kg/Nm³ zu Sauerstoffmenge im Oxidationsmittel in Nm³/h, die über den Oxidationsmittel-haltigen Gasstrom zugegeben wird, kann zwischen 0,001 und 1, vorzugsweise zwischen 0,01 und 0,50, besonders bevorzugt zwischen 0,02 und 0,20, liegen. Die Ölbeladung in kg/Nm³ ist das Verhältnis von Ölmenge des Rußrohstoffs in kg/h zu Verbrennungsluftmenge in Nm³/h (wobei Nm³ Normkubikmeter bedeutet).

Durch das erfindungsgemäße Verfahren hergestellte Ruße können ein BET/STSA-Verhältnis zwischen 0,9 und 1,2, bevorzugt zwischen 0,95 und 1,15, besonders bevorzugt zwischen 1,0 und 1,1, haben. Durch das erfindungsgemäße Verfahren hergestellte Ruße können ein Iodzahl/CTAB-Verhältnis ≤ 1,10, bevorzugt zwischen 0,90 und 1,10, haben.

Die oben angegebenen Rußparameter werden gemäß der im experimentellen Teil definierten Methoden gemessen.

Die durch das erfindungsgemäße Verfahren hergestellten Ruße können als Füllstoff, Verstärkerfüllstoff, UV-Stabilisator, Leitfähigkeitsruß oder Pigment verwendet werden. Die Ruße können in Kautschuk und Kautschukmischungen, Kunststoff, beispielsweise PE, PP, PVA oder TPE's, Druckfarben, Tinten, Inkjet-Tinten, Tonern, Lacken, Farben, Klebstoffen, Batterien, Pasten, Papier, Bitumen, Beton und anderen Baustoffen eingesetzt werden. Die erfindungsgemäßen Ruße können als Reduktionsmittel in der Metallurgie angewendet werden.

### Beispiele

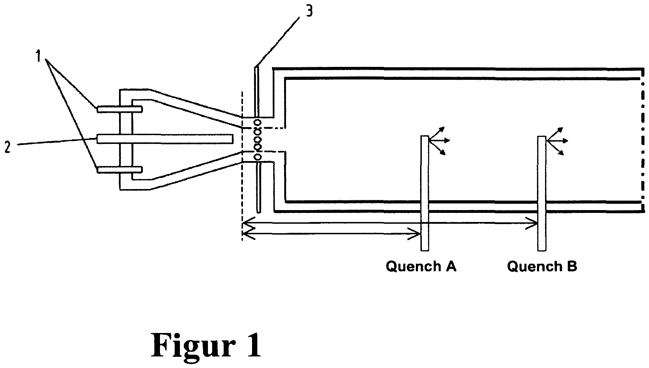

Eine Reihe von Rußen wird in dem in Figur 1 dargestellten Rußreaktor hergestellt.

Figur 1 zeigt einen Längsschnitt durch den Furnacereaktor. Der Rußreaktor besitzt eine Brennkammer, in der das heiße Prozeßgas für die Pyrolyse des Rußöles durch Verbrennen von Erdgas unter Zufuhr von einem Überschuß an Luftsauerstoff erzeugt wird.

Die Zufuhr der Verbrennungsluft und des Brennstoffes erfolgt über die Öffnungen 1 in der Stirnwand der Brennkammer. Die Brennkammer läuft konisch auf die Engstelle zu. Der Rußrohstoff wird über Radiallanzen 3 und/oder axial über Lanze 2 in der Engstelle eingedüst. Nach Durchqueren der Engstelle expandiert das Reaktionsgasgemisch in die Reaktionskammer.

In der Abbruchzone wird durch die Quenchwasser-Lanzen A und/oder B Wasser eingesprüht.

Die Abmessungen des verwendeten Reaktors sind der folgenden Aufstellung zu entnehmen:

| | |
|---|---|
| Größter Durchmesser der Brennkammer: | 220 mm |
| Länge der Brennkammer bis Engstelle: | 556 mm |
| Länge des konischen Teils der Brennkammer: | 256 mm |
| Durchmesser der Engstelle: | 44 mm |
| Länge der Engstelle: | 100 mm |
| Durchmesser der Reaktionskammer: | 200 mm |
| Maximale Position der Quenchwasserlanze(n) ¹⁾ | 6840 mm |

| | |
|---|---|
| ¹⁾ gemessen vom Eintritt in die Engstelle (+: nach Eintritt -: vor Eintritt) | |

Zur Herstellung der Ruße werden als Brennstoff Erdgas und als Rußöl ein Kohleteeröl-Destillat (Coal Tar Destillate = CTD) mit einem Kohlenstoffgehalt von 91 Gew.-% und einem Wasserstoffgehalt von 5,7 Gew.-% eingesetzt.

Die Reaktorparameter für die Herstellung der Ruße und ihre analytischen Daten sind in den Tabellen 1 - 4 aufgeführt. Die Herstellbedingungen unterschieden sich insbesondere bezüglich der in die Abbruchzone gegebenen Oxidationsmittelmenge, der eingesetzten Ölmenge und der Wassermengen im Quench A.

Die rußanalytischen Kenndaten der hergestellten Ruße werden nach folgenden Normen ermittelt:

| | |
|---|---|
| CTAB-Oberfläche: | ASTM D 3765 |
| Jodzahl: | ASTM D 1510 |
| STSA: | ASTM D 6556 |
| BET-Oberfläche: | ASTM D 6556 |
| OAN Absorption: | ASTM D 2414 |
| pH-Wert: | ASTM D 1512 |
| Transmission: | ASTM D 1618 |
| Flüchtige Bestandteile: | DIN 53552 |
| Tint: | ASTM D 3265 |
| Feuchte: | DIN EN-ISO 787-2 |

### PAK-Gehalt:

Die Bestimmung der PAKs erfolgt nach der FDA Method No. 63, Determination of PAH Content of carbon black, released by FDA, 200 "C" Street, S.W. Washington, D.C. 20204, USA, July 8, 1994. Die Rußmuster werden im Soxhlet-Extraktor mit Toluol für 48 Stunden unter Stickstoff extrahiert und die PAKs im aufkonzentrierten Extrakt mittels GC-MS quantitativ bestimmt.

Der Gehalt an polyaromatischen Kohlenwasserstoffen berechnet sich aus der Summe der folgenden Verbindungen:
Naphthalin, Acenaphthylen, Acenaphthen, Fluoren, Phenanthren, Anthracen, Fluoranthen , Pyren, Benzo(ghi)fluoranthen, Benz(a)anthracen, Cyclopenta(cd)pyren, Chrysen, Benzo(b/j)fluoranthen^{a}, Benzo(k)fluoranthen, Benzo(e)pyren, Benzo(a)pyren , Perylen, Dibenz(a,c/a,h)anthracen^{a}, Benzo(ghi)perylen , Indeno(1,2,3-cd)pyren , Anthanthren und Coronen (^{a} koeluierende PAK Komponenten).

### Beispiel 1:

In der ersten Versuchserie wird im Vergleichsbeispiel 1 ohne Quench 1 gearbeitet, im Vergleichsbeispiel 2 wird im Quench A Wasser zugegeben und mit Stickstoff zerstäubt. Im erfindungsgemäßen Beispiel 3 wird das im Quench A zugegebene Wasser mit einem Gasgemisch aus Sauerstoff und Stickstoff zerstäubt (Tabelle 1). In dem Quench B wird nur Wasser eingedüst.

**Tabelle 1:**

| Beispiel | Einheit | 1 Vergleichs-beispiel | 2 Vergleichs-beispiel | 3 |
|---|---|---|---|---|
| **Verbrennungszone** | | | | |
| Verbrennungsluft-Menge | Nm³ / h | 150 | 150 | 150 |
| Verbrennungsluft-temperatur | °C | 576 | 556 | 571 |
| Brennstoff-Menge (Erdgas) | Nm³ / h | 6,19 | 6,18 | 6,19 |
| **Reaktionszone** | | | | |
| Rußöltyp | | CTD | CTD | CTD |
| Zerstäuberart | | Zweistoff | Zweistoff | Zweistoff |
| Rußöl-Menge | kg/h | 2 x 22 | 2 x 22 | 2 x 22 |
| Ölbeladung (C) | kg/Nm³ | 0,29 | 0,29 | 0,29 |
| Rußöl-Temperatur | °C | 83 | 80,5 | 82,5 |
| Rußöl-Zugabe | | radial | radial | radial |
| Zerstäubergas | | N₂ | N₂ | N₂ |
| Zerstäubergasmenge | Nm³/h | 2 x 2 | 2 x 2 | 2 x 2 |
| **Abbruchzone** | | | | |
| **Quench A** | | | | |
| Quenchposition | mm | - | 4290 | 4290 |
| Zerstäuberart | | - | Zweistoff | Zweistoff |
| Zerstäubergas | Vol.-% | - | 100 N₂ | 5,9 O₂ / 94,1 N₂ |
| Zerstäubergas-Menge | Nm³/h | - | 35 | 49 |
| Sauerstoff-Menge (D) | Nm³/h | 0,0 | 0,0 | 2,88 |
| Wassermenge | kg/h | - | 23,4 | 20 |
| Sprührichtung | | axial, mit Strom | axial, mit Strom | axial, mit Strom |
| **Quench B** | | | | |
| Quenchposition | mm | 6840 | 6840 | 6840 |
| Zerstäuberart | | Einstoff | Einstoff | Einstoff |
| Wassermenge | kg/h | 28 | 25,6 | 26 |
| Sprührichtung | | axial, mit Strom | axial, mit Strom | axial, mit Strom |
| Verhältnis C/D | | - | - | 0,102 |
| **Analytische Daten** | | | | |
| CTAB-Oberfläche | m²/g | 47,1 | 49,1 | 47,4 |
| Jodzahl | mg/g | 50,4 | 53,9 | 51,6 |
| BET-Oberfläche | m²/g | 46,5 | 48,7 | 49,6 |
| STSA | m²/g | 44,8 | 46,9 | 46,6 |
| BET/STSA | | 1,04 | 1,04 | 1,06 |
| OAN | ml/100g | 127,5 | 134,5 | 136,5 |
| Tint | % | 63,3 | 63,8 | 61,5 |
| Transmission 425 nm | % | 84 | 83 | 98 |
| pH-Wert | | 7,7 | 7,4 | 8,1 |
| Feuchte | % | 0,6 | 0,9 | 0,6 |
| Flüchtige Bestandteile 950 °C | % | 1,9 | 2,2 | 1,6 |
| 22 PAK nach FDA | ppm | 421 | 562 | 140 |
| Benzo[a]pyren | ppm | 10,6 | 10,7 | 1,24 |

Wie die Vergleichsbeispiele 1 und 2 zeigen, erhält man unter den vorgegebenen Reaktorbedingungen Ruße mit niedrigen Transmissionswerten sowie hohen PAK- und Benzo[a]pyren-Gehalten. Beim erfindungsgemäßen Beispiel 3 wird durch die Zerstäubung der Wassermenge am Quench A mit einem Sauerstoff-Stickstoff-Gemisch der Transmissionswert deutlich erhöht und dementsprechend der PAK-Gehalt und Benzo[a]pyren-Gehalt deutlich reduziert.

### Beispiel 2

In der zweiten Versuchserie wird die Rußölmenge leicht erhöht. Im Vergleichsbeispiel 4 wird im Quench A Wasser zugegeben und mit Stickstoff zerstäubt. In den erfindungsgemäßen Beispielen 5 und 6 werden die Zerstäubungen des im Quench A zugegebenen Wassers mit einem Gasgemisch aus Sauerstoff und Stickstoff durchgeführt, wobei die Sauerstoffkonzentration und die Gasmenge variiert werden (Tabelle 2). In dem Quench B wird nur Wasser eingedüst.

**Tabelle 2:**

| Beispiel | Einheit | 4 Vergleichs-beispiel | 5 | 6 |
|---|---|---|---|---|
| **Verbrennungszone** | | | | |
| Verbrennungsluft-Menge | Nm³/h | 150 | 150 | 150 |
| Verbrennungsluft-temperatur | °C | 569 | 548 | 588 |
| Brennstoffmenge (Erdgas) | Nm³/h | 6,17 | 6,18 | 6,21 |
| **Reaktionszone** | | | | |
| Rußöltyp | | CTD | CTD | CTD |
| Zerstäuberart | | Zweistoff | Zweistoff | Zweistoff |
| Rußöl-Menge | kg/h | 2 x 25 | 2 x 25 | 2 x 25 |
| Ölbeladung (C) | kg/Nm³ | 0,33 | 0,33 | 0,33 |
| Rußöl-Temperatur | °C | 91,5 | 92 | 88,8 |
| Rußöl-Zugabe | | radial | radial | radial |
| Zerstäubergas | | N₂ | N₂ | N₂ |
| Zerstäubergasmenge | Nm³/h | 2 x 2 | 2 x 2 | 2 x 2 |
| **Abbruchzone** | | | | |
| **Quench A** | | | | |
| Quenchposition | mm | 4290 | 4290 | 4290 |
| Zerstäuberart | | Zweistoff | Zweistoff | Zweistoff |
| Zerstäubergas | Vol.-% | 100 N₂ | 16 O₂/ 84 N₂ | 18,9 O₂/ 81,1 N₂ |
| Zerstäubergas-Menge | Nm³/h | 40 | 21 | 30 |
| Sauerstoff-Menge (D) | Nm³/h | 0,0 | 3,35 | 5,66 |
| Wassermenge | kg/h | 15 | 15 | 15 |
| Sprührichtung | | axial, mit Strom | axial, mit Strom | axial, mit Strom |
| **Quench B** | | | | |
| Quenchposition | mm | 6840 | 6840 | 6840 |
| Zerstäuberart | | Einstoff | Einstoff | Einstoff |
| Wassermenge | kg/h | 26 | 39 | 40 |
| Sprührichtung | | axial, mit Strom | axial, mit Strom | axial, mit Strom |
| Verhältnis C/D | | - | 0,0995 | 0,0589 |
| **Analytische Daten** | | | | |
| CTAB-Oberfläche | m²/g | 42,1 | 43, 6 | 45,4 |
| Jodzahl | mg/g | 41,8 | 42 | 48,5 |
| BET-Oberfläche | m²/g | 45,2 | 39,8 | 44,2 |
| STSA | m²/g | 41,9 | 37,6 | 41,9 |
| BET/STSA | | 1,08 | 1,06 | 1,05 |
| OAN | ml/100g | 121,3 | 117,3 | 132,3 |
| Tint | % | 56,4 | 58,1 | 60,3 |
| Transmission 425 nm | % | 44 | 72 | 92 |
| pH-Wert | | 8,6 | 8,5 | 9,1 |
| Feuchte | % | 0,5 | 0,6 | 0,3 |
| Flücht. Bestandteile 950 °C | % | 1,3 | 1,5 | 1,8 |
| 22 PAK nach FDA | ppm | 1114 | 222 | 221 |
| Benzo[a]pyren | ppm | 21,9 | 7,11 | 0,77 |

Wie das Vergleichsbeispiel 4 zeigt, erhält man unter den vorgegebenen Reaktorbedingungen einen Ruß mit einem niedrigen Transmissionswert sowie einem sehr hohen PAK- und Benzo[a]pyren-Gehalt. Bei den erfindungsgemäßen Beispielen 5 und 6 werden durch die Zerstäubung des Wassers am Quench A mit einem Gasgemisch aus Sauerstoff und Stickstoff der Transmissionswert deutlich erhöht und dementsprechend der PAK-Gehalt und Benzo[a]pyren-Gehalt deutlich reduziert.

### Beispiel 3:

In der dritten Versuchserie wird die Wassermenge im Quench A variiert. Im Vergleichsbeispiel 4 wird im Quench A Wasser zugegeben und mit Stickstoff zerstäubt. In den erfindungsgemäßen Beispielen 7, 8 und 9 werden die Zerstäubung des im Quench A zugegebenen Wassers mit einem Gasgemisch aus Sauerstoff und Stickstoff durchgeführt, wobei die Wassermenge im Quench A angehoben wird (Tabelle 3). In dem Quench B wird nur Wasser eingedüst.

**Tabelle 3:**

| Beispiel | Einheit | 4 Vergleichs-beispiel | 7 | 8 | 9 |
|---|---|---|---|---|---|
| **Verbrennungszone** | | | | | |
| Verbrennungsluft-Menge | Nm³/h | 150 | 150 | 150 | 150 |
| Verbrennungsluft-temperatur | °C | 569 | 588 | 665 | 668 |
| Brennstoffmenge (Erdgas) | Nm³/h | 6,17 | 6,21 | 6,17 | 6,15 |
| **Reaktionszone** | | | | | |
| Rußöltyp | | CTD | CTD | CTD | CTD |
| Zerstäuberart | | Zweistoff | Zweistoff | Zweistoff | Zweistoff |
| Rußöl-Menge | kg/h | 2 x 25 | 2 x 25 | 2 x 25 | 2 x 25 |
| Ölbeladung (C) | kg/Nm³ | 0,33 | 0,33 | 0,33 | 0,33 |
| Rußöl-Temperatur | °C | 91,5 | 88,8 | 91,5 | 92 |
| Rußöl-Zugabe | | radial | radial | radial | radial |
| Zerstäubergas | | N₂ | N₂ | N₂ | N₂ |
| Zerstäubergasmenge | Nm³/h | 2 x 2 | 2 x 2 | 2 x 2 | 2 x 2 |
| **Abbruchzone** | | | | | |
| **Quench A** | | | | | |
| Quenchposition | mm | 4290 | 4290 | 4290 | 4290 |
| Zerstäuberart | | Zweistoff | Zweistoff | Zweistoff | Zweistoff |
| Zerstäubergas | Vol.-% | 100 N₂ | 18,9 O₂/ 81,1 N₂ | 19,5 O₂/ 80,5 N₂ | 19,4 O₂/ 80,6 N₂ |
| Zerstäubergas-Menge | Nm³/h | 40 | 30 | 36,5 | 34,5 |
| Sauerstoff-Menge (D) | Nm³/h | 0,0 | 5,66 | 7,1 | 6,7 |
| Wassermenge | kg/h | 15 | 15 | 20 | 27,5 |
| Sprührichtung | | axial, mit Strom | axial, mit Strom | axial, mit Strom | axial, mit Strom |
| **Quench B** | | | | | |
| Quenchposition | mm | 6840 | 6840 | 6840 | 6840 |
| Zerstäuberart | | Einstoff | Einstoff | Einstoff | Einstoff |
| Wassermenge | kg/h | 26 | 40 | 30 | 20,5 |
| Sprührichtung | | axial, mit Strom | axial, mit Strom | axial, mit Strom | axial, mit Strom |
| Verhältnis C/D | | - | 0,0589 | 0,0469 | 0,0498 |
| **Analytische Daten** | | | | | |
| CTAB-Oberfläche | m²/g | 42,1 | 45,4 | 42,9 | 46,4 |
| Jodzahl | mg/g | 41,8 | 48,5 | 45,9 | 50 |
| BET-Oberfläche | m²/g | 45,2 | 44,2 | 42,7 | 47,3 |
| STSA | m²/g | 41,9 | 41,9 | 40,4 | 43,4 |
| BET/STSA | | 1,08 | 1,05 | 1,06 | 1,09 |
| OAN | ml/100g | 121,3 | 132,3 | 115,8 | 134,5 |
| Tint | % | 56,4 | 60,3 | 57,7 | 61,0 |
| Transmission 425 nm | % | 44 | 92 | 96 | 100 |
| pH-Wert | | 8,6 | 9,1 | 9,2 | 9,0 |
| Feuchte | % | 0,5 | 0,3 | 0,2 | 0,9 |
| Flüchtige Bestandteile | % | 1,3 | 1,8 | 1,7 | 1,2 |
| 950 °C | | | | | |
| 22 PAK nach FDA | ppm | 1114 | 221 | 222 | 43,7 |
| Benzo[a]pyren | ppm | 21,9 | 0,77 | 3,23 | 0,37 |

Wie das Vergleichsbeispiel 4 zeigt, erhält man unter den vorgegebenen Reaktorbedingungen einen Ruß mit einem niedrigen Transmissionswert sowie einem sehr hohen PAK- und Benzo[a]pyren-Gehalt. Bei den erfindungsgemäßen Beispielen 7 - 9 werden durch die Zerstäubung der unterschiedlichen Wassermengen am Quench A mit einem Gasgemisch aus Sauerstoff und Stickstoff der Transmissionswert deutlich erhöht und dementsprechend der PAK-Gehalt und Benzo[a]pyren-Gehalt deutlich reduziert.

### Beispiel 4

In der vierten Versuchserie wird die Zerstäubergas- und die Wassermenge am Quench A konstant gehalten. Im Vergleichsbeispiel wird ohne Sauerstoff- und im erfindungsgemäßen Beispiel 11 mit Sauerstoffzusatz im Quench A gefahren. In dem Quench B wird nur Wasser eingedüst.

**Tabelle 4:**

| Beispiel | Einheit | 10 Vergleichs-beispiel | 11 |
|---|---|---|---|
| **Verbrennungszone** | | | |
| Verbrennungsluft-Menge | Nm³/h | 150 | 150 |
| Verbrennungsluft-temperatur | °C | 635 | 668 |
| Brennstoffmenge (Erdgas) | Nm³/h | 6,2 | 6,15 |
| **Reaktionszone** | | | |
| Rußöltyp | | CTD | CTD |
| Zerstäuberart | | Zweistoff | Zweistoff |
| Rußöl-Menge | kg/h | 2 x 25 | 2 x 25 |
| Ölbeladung (C) | kg/Nm³ | 0,33 | 0,33 |
| Rußöl-Temperatur | °C | 92 | 92 |
| Rußöl-Zugabe | | radial | radial |
| Zerstäubergas | | N₂ | N₂ |
| Zerstäubergasmenge | Nm³/h | 2 x 2 | 2 x 2 |
| **Abbruchzone** | | | |
| **Quench A** | | | |
| Quenchposition | mm | 4290 | 4290 |
| Zerstäuberart | | Zweistoff | Zweistoff |
| Zerstäubergas | Vol.-% | 100 N₂ | 19,4 O₂/ 80,6 N₂ |
| Zerstäubergas-Menge | Nm³/h | 34 | 34,5 |
| Sauerstoff-Menge (D) | Nm³/h | 0 | 6,7 |
| Wassermenge | kg/h | 27,5 | 27,5 |
| Sprührichtung | | axial, mit Strom | axial, mit Strom |
| **Quench B** | | | |
| Quenchposition | mm | 6840 | 6840 |
| Zerstäuberart | | Einstoff | Einstoff |
| Wassermenge | kg/h | 0 | 20,5 |
| Sprührichtung | | axial, mit Strom | axial, mit Strom |
| Verhältnis C/D | | - | 0,0498 |
| **Analytische Daten** | | | |
| CTAB-Oberfläche | m²/g | 43,9 | 46,4 |
| Jodzahl | mg/g | 46,9 | 50 |
| BET-Oberfläche | m²/g | 49,2 | 47,3 |
| STSA | m²/g | 41,2 | 43,4 |
| BET/STSA | | 1,19 | 1,09 |
| OAN | ml/100g | 124 | 134,5 |
| Tint | % | 56,0 | 61,0 |
| Transmission 425 nm | % | 84 | 100 |
| pH-Wert | | 8,4 | 9,0 |
| Feuchte | % | 0,3 | 0,9 |
| Flüchtige Bestandteile 950 °C | % | 2,0 | 1,2 |
| 22 PAK nach FDA | ppm | 758 | 43,7 |
| Benzo[a]pyren | ppm | 14,8 | 0,37 |

Wie das Vergleichsbeispiel 10 zeigt, erhält man unter den vorgegebenen Reaktorbedingungen einen Ruß mit niedrigem Transmissionswert sowie hohem PAK- und Benzo[a]pyren -Gehalt. Bei dem erfindungsgemäßen Beispiel 11 wird durch die Zerstäubung der Wassermenge am Quench A mit einem Gasgemisch aus Sauerstoff und Stickstoff der Transmissionswert deutlich erhöht und dementsprechend der PAK-Gehalt und Benzo[a]pyren-Gehalt deutlich reduziert.

## Patentansprüche

1. Verfahren zur Herstellung von Furnaceruß in einem Furnacerußreaktor, welcher längs der Reaktorachse eine Verbrennungszone, eine Reaktionszone und eine Abbruchzone enthält, durch Erzeugen eines Stromes heißen Abgases in der Verbrennungszone durch vollständiges Verbrennen eines Brennstoffes in einem Sauerstoff enthaltenden Gas und Leiten des Abgases von der Verbrennungszone durch die Reaktionszone in die Abbruchzone, Einmischen eines Rußrohstoffes in das heiße Abgas in der Reaktionszone und Abstoppen der Reaktion zwischen Ruß und den heißen Abgasen in der Abbruchzone durch Einsprühen von Wasser, **dadurch gekennzeichnet, dass** man in der Abbruchzone ein Oxidationsmittel-haltigen Gasstrom einleitet.

2. Verfahren zur Herstellung von Furnaceruß gemäß Anspruch 1, **dadurch gekennzeichnet, dass** man als Oxidationsmittel-haltigen Gasstrom Luft, mit-Sauerstoff ab- oder angereicherte Luft, Sauerstoff, Ozon, ein Gasgemisch aus Wasserstoffperoxid und Luft und/oder Stickstoff, ein Gasgemisch aus Salpetersäure und Luft und/oder Stickstoff, ein Gasgemisch aus Stickstoffdioxid bzw. Distickstofftetroxid und Luft und/oder Stickstoff oder ein Gasgemisch aus Verbrennungsprodukten von Kohlenwasserstoffen und Oxidationsmittel einsetzt.

3. Verfahren zur Herstellung von Furnaceruß gemäß den Ansprüchen 1 und 2, **dadurch gekennzeichnet, dass** man den Oxidationsmittel-haltigen Gasstrom über eine oder mehrere radiale Lanzen oder über eine radiale Lanze, die in axiale Richtung mit dem Strom oder gegen den Strom sprüht, in die Abbruchzone einbringt.

4. Verfahren zur Herstellung von Furnaceruß gemäß den Ansprüchen 1-3, **dadurch gekennzeichnet, dass** man den Oxidationsmittel-haltigen Gasstrom als Zerstäubermedium für den Wasserquench einsetzt.

5. Verfahren zur Herstellung von Furnaceruß gemäß den Ansprüchen 1-4, **dadurch gekennzeichnet, dass** der Oxidationsmittel-haltige Gasstrom eine Temperatur von - 100 °C bis 1000 °C, hat.

6. Verfahren zur Herstellung von Furnaceruß gemäß den Ansprüchen 1-4, **dadurch gekennzeichnet, dass** der Oxidationsmittel-haltige Gasstrom einen Druck von 5 kPa - 5.000 kPa hat.

7. Verfahren zur Herstellung von Furnaceruß gemäß den Ansprüchen 1-6, **dadurch gekennzeichnet, dass** das Verhältnis von Ölbeladung in kg/Nm³ zu Sauerstoffmenge im Oxidationsmittel in Nm³/h, die über den Oxidationsmittel-haltigen Gasstrom zugegeben wird, zwischen 0,001 und 1 beträgt.
